# EUROPÄISCHE PATENTANMELDUNG

(11) **EP 2 237 384 A2**
(43) Veröffentlichungstag der Anmeldung: **06.10.2010**
(21) Anmeldenummer: 10000903.4
(22) Anmeldetag: 29.01.2010
(51) Int. Cl.: H02B 1/56

(54) **Kühlsystem für ein elektrisches Umspannwerk insbesondere für eine Windkraftanlage**

(30) Priorität: 03.04.2009 DE 102009017468
(71) Anmelder: AREVA Energietechnik GmbH, 01099 Dresden (DE)
(72) Erfinder: Zschoge, Florian, 01099 Dresden (DE); Hentschel, Gert, Dr., 01109 Dresden (DE); Macher, Andreas, Dr., 01157 Dresden (DE); Marburg, Dieter, 01187 Dresden (DE)
(74) Vertreter: Schäfer, Wolfgang

(57) **Zusammenfassung**

Es wird ein Kühlsystem (30) für ein elektrisches Umspannwerk beschrieben. Es ist ein schwimmfähiger Ponton (12) vorhanden, der einen Boden (14) und Außenwände aufweist, und der auf Säulen (13) aufgestellt ist. Das Umspannwerk weist elektrische Komponenten auf, die dem Ponton (12) zugeordnet sind. Das Kühlsystem (30) weist Rohrleitungen (31) auf, die auf der Unterseite des Bodens (14) und/oder an den Außenseite der Außenwände und/oder auf der Außenseite und/oder der Innenseite der Säulen (13) angeordnet sind. Die von den Komponenten des Umspannwerks erzeugte Wärme ist mit Hilfe des Kühlsystems (30) an die den Ponton (12) umgebende Luft und/oder an das Seewasser abgebbar.

## Beschreibung

Die Erfindung betrifft ein Kühlsystem für ein elektrisches Umspannwerk insbesondere für eine Windkraftanlage.

Bei der Gewinnung von elektrischer Energie kommen immer häufiger Windkraftanlagen zum Einsatz. Es sind sogenannte Off-Shore Windparks bekannt, bei denen in einem örtlichen Bereich des Meeres mehrere Windräder betrieben werden. Deren erzeugte Energie wird über ein Seekabel an ein gemeinsames Umspannwerk weitergegeben. Dort wird die elektrische Energie in eine erwünschte Hochspannung umgeformt und dann über ein weiteres Seekabel an einen land- oder seegebundenen Netzeinspeisungspunkt eines Energieversorgungsnetzes weitergegeben.

Das Umspannwerk ist üblicherweise in der näheren Umgebung der Windräder vorgesehen. Bei Off-Shore Windparks wird hierzu eine Arbeitsplattform im Meer aufgestellt, auf deren Oberfläche die elektrischen Komponenten des Umspannwerks, also beispielsweise Transformatoren, Schalter und dergleichen, angeordnet sind. Zum Schutz gegen das Meeresklima sind die Komponenten zumeist in Containern oder dergleichen untergebracht.

Zur Verwendung bei einem Umspannwerk ist es beispielsweise bekannt, die Arbeitsplattform mittels einer Gründungsstruktur, beispielsweise mittels einer Gitterkonstruktion oder eines sogenannten Monopile oder Tripod auf dem Meeresboden zu errichten.

In der EP 959 182 B1 ist eine Bohrplattform beschrieben, die bei der Rohölgewinnung zum Einsatz kommt. Auf der Oberfläche der Plattform sind ein Bohrturm und ein Arbeitskran aufgestellt. Die Bohrplattform ist Bestandteil eines schwimmfähigen Pontons, der mittels einer Mehrzahl von Säulen auf dem Meeresboden errichtet ist.

Die elektrischen Komponenten eines Umspannwerks, beispielsweise die Transformatoren, Drosseln und/oder Leistungsschalter, erzeugen während ihres Betriebs Wärme. Diese Wärme muss von den Komponenten abgeführt werden. Hierzu sind Kühlsysteme bekannt, bei denen mit Hilfe von Lüfteranordnungen die erzeugte Wärme von den Komponenten nach außen an die Umgebungsluft abgegeben wird. Diese Lüfteranordnungen können beispielsweise in die Wände der die Komponenten enthaltenden Container eingebaut sind.

Ein Nachteil derartiger Kühlsysteme besteht darin, dass die vorgesehenen Lüfteranordnungen zumindest teilweise dem aggressiven Seeklima, insbesondere dem Salzwasser ausgesetzt sind. Dies führt dazu, dass ein hoher Aufwand im Hinblick auf den Korrosionsschutz für diese Kühlsysteme betrieben werden muss.

Aufgabe der Erfindung ist es, ein Kühlsystem für ein elektrisches Umspannwerk zu schaffen, das im Hinblick auf die vorstehenden Nachteile verbessert ist.

Diese Aufgabe wird durch ein Kühlsystem nach dem Anspruch 1 sowie durch einen schwimmfähigen Ponton nach dem Anspruch 2 gelöst.

Es ist ein schwimmfähiger Ponton vorhanden, der einen Boden und Außenwände aufweist, und der auf Säulen aufgestellt ist. Das Umspannwerk weist elektrische Komponenten auf, die dem Ponton zugeordnet sind. Das Kühlsystem weist Rohrleitungen auf, die auf der Unterseite des Bodens und/oder an der Außenseite der Außenwände und/oder auf der Außenseite und/oder der Innenseite der Säulen angeordnet sind. Die von den Komponenten des Umspannwerks erzeugte Wärme ist mit Hilfe des Kühlsystems an die den Ponton umgebende Luft und/oder an das Seewasser abgebbar.

Bei dem erfindungsgemäßen Kühlsystem sind nur die Rohrleitungen dem Seeklima ausgesetzt. Derartige Rohrleitungen können jedoch mit einem eher geringen Aufwand gegen Korrosion geschützt werden. Weiterhin steht beispielsweise auf der Unterseite des Pontons eine große Fläche zur Verfügung, so dass eine Vielzahl von Rohrleitungen dort angeordnet werden können. Damit kann mit dem erfindungsgemäßen Kühlsystem eine hohe Kühlleistung erreicht werden. Dabei ist es unerheblich, wo die die Wärme erzeugenden Komponenten des Umspannwerks angeordnet sind. Besonders vorteilhaft ist es allerdings, wenn die Komponenten im Inneren des Pontons untergebracht sind. Auf diese Weise sind auch die elektrischen Komponenten besonders gut gegen das aggressive Seeklima geschützt. Weiterhin ergeben sich daraus kurz Entfernungen von den die Wärme erzeugenden Komponenten zu den die Wärme abgebenden Rohrleitungen.

Besonders vorteilhaft ist es, wenn die Rohrleitungen im Querschnitt als Halbschale ausgebildet sind. Die Rohrleitungen sind in diesem Fall beispielsweise direkt auf der Unterseite des Bodens des Pontons befestigt. Damit wird erreicht, dass nahezu keine Angriffsfläche für eine mögliche Korrosion der Rohrleitungen vorhanden ist.

Ebenfalls kann es besonders vorteilhaft sein, wenn die Rohrleitungen mit Hilfe eines Trägers befestigt sind. Damit können übliche Rohrleitungen mit einem beispielsweise runden Querschnitt verwendet werden. Auch auf diese Weise wird eine mögliche Korrosion der Rohrleitungen verhindert.

Bei einer vorteilhaften Weiterbildung der Erfindung sind die Rohrleitungen mit einer Finne versehen. Weiterhin kann es besonders vorteilhaft sein, wenn die Rohrleitungen gegebenenfalls zusammen mit vorhandenen Finnen etwa parallel zu einer Hauptwindrichtung ausgerichtet sind, die an dem Standort des Pontons auf See üblicherweise vorherrscht. Durch diese Maßnahmen kann die Kühlleistung des erfindungsgemäßen Kühlsystems weiter verbessert werden.

Besonders zweckmäßig ist es, wenn die Rohrleitungen mit einem üblichen Kühlmedium, insbesondere mit Wasser befüllt sind. Das erfindungsgemäße Kühlsystem wird in diesem Fall also nicht mit salzhaltigem Meerwasser betrieben, so dass auch insoweit eine mögliche Korrosion der Rohrleitungen verhindert wird.

Weitere Merkmale, Anwendungsmöglichkeiten und Vorteile der Erfindung ergeben sich aus der nachfolgenden Beschreibung von Ausführungsbeispielen der Erfindung, die in den Figuren der Zeichnung dargestellt sind. Dabei bilden alle beschriebenen oder dargestellten Merkmale für sich oder in beliebiger Kombination den Gegenstand der Erfindung, unabhängig von ihrer Zusammenfassung in den Patentansprüchen oder deren Rückbeziehung sowie unabhängig von ihrer Formulierung bzw. Darstellung in der Beschreibung bzw. in der Zeichnung.

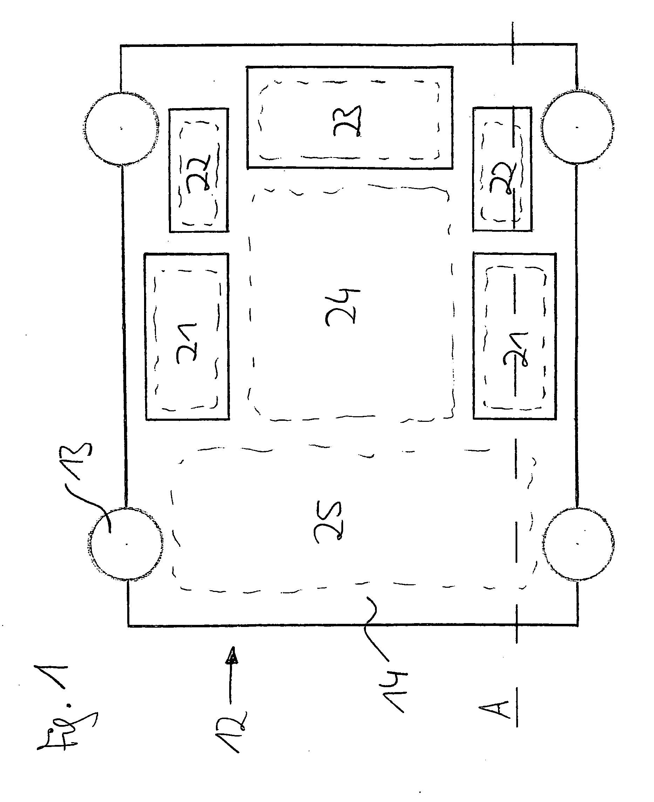

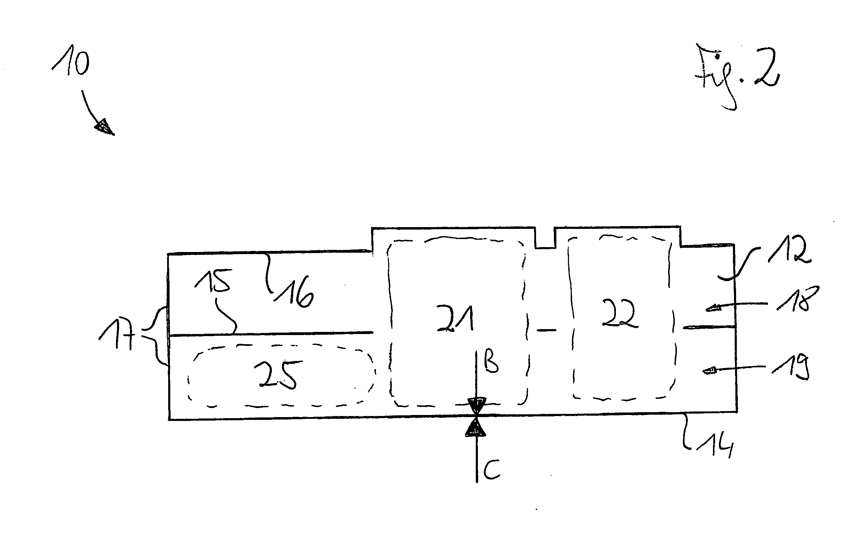

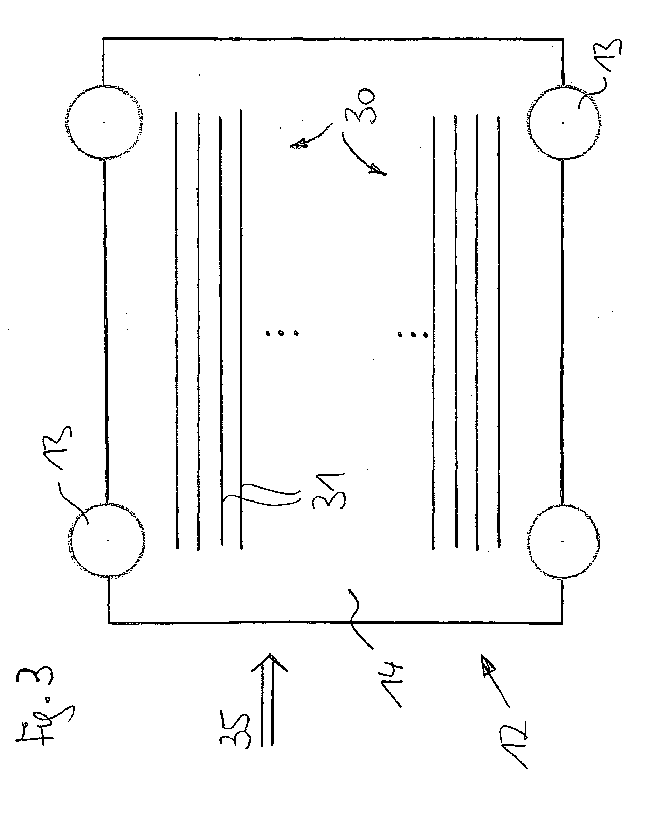

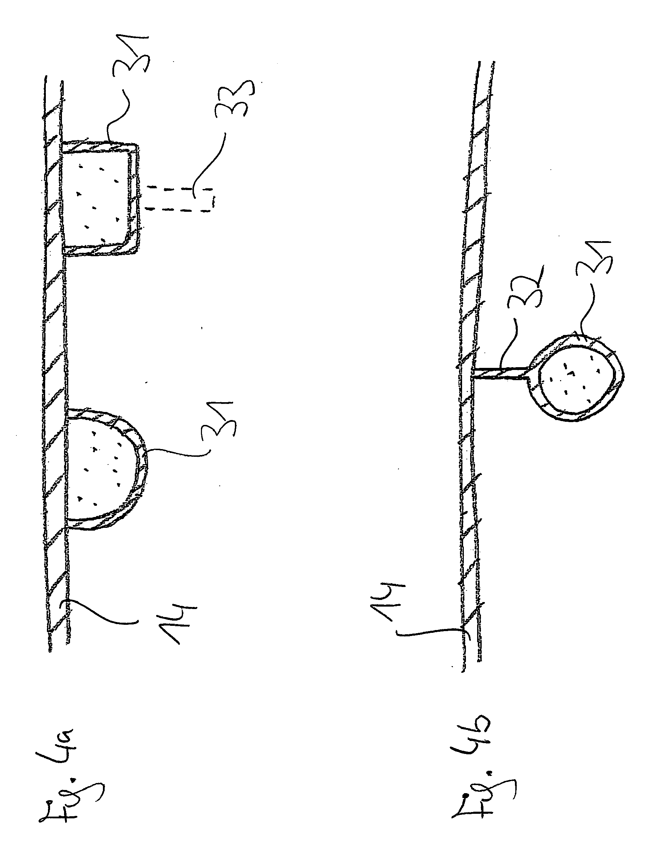

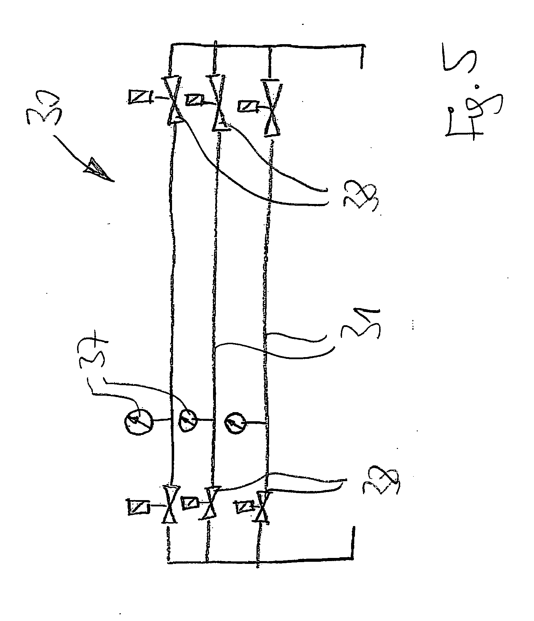

Figur 1 zeigt eine schematische Draufsicht auf ein Ausführungsbeispiel eines erfindungsgemäßen seegebundenen elektrischen Umspannwerks aus der Richtung B der Figur 2, Figur 2 zeigt einen schematischen Querschnitt des Umspannwerks der Figur 1 entlang der Linie A Figur 1, Figur 3 zeigt eine schematische Draufsicht auf das Umspannwerk der Figur 1 aus der Richtung C der Figur 2, Figuren 4a und 4b zeigen schematische Querschnitte von Rohrleitungen eines Kühlsystems für das Umspannwerk der Figur 1, und Figur 5 zeigt einen schematischen Schaltplan des Kühlsystems für das Umspannwerk der Figur 1.

In den Figuren 1 und 2 ist ein Umspannwerk 10 dargestellt, das vorzugsweise im Zusammenhang mit einer Windkraftanlage zum Einsatz kommt, die im Meer oder in einem See aufgestellt ist. Beispielsweise kann ein sogenannter Off-Shore Windpark vorhanden sein, dessen mehrere Windkraftanlagen die jeweils erzeugte Energie über Seekabel an das Umspannwerk 10 liefern. Die zugeführte elektrische Energie wird von dem Umspannwerk 10 in eine erwünschte Hochspannung umgewandelt und über weitere Seekabel in ein land- oder seegebundenes Energieversorgungsnetz eingespeist.

Das Umspannwerk 10 ist im Innenraum eines schwimmfähigen Pontons 12 untergebracht. Der Ponton 12 ist etwa quaderförmig ausgebildet und hat beispielsweise eine Länge von etwa 35 bis 45 Metern, eine Breite von etwa 25 bis 35 Metern und eine Höhe von etwa 6 bis 8 Metern. Der Ponton 12 weist vier Säulen 13 auf, mit denen der Ponton 12 auf dem Meeresboden aufgestellt werden kann.

Der Ponton 12 weist einen Boden 14, eine Zwischendecke 15 und eine Plattform 16 auf, die von Außenwänden 17 umgeben sind. Der Ponton 12 bildet eine schwimmfähige Wanne. Der Innenraum des Pontons 12 ist für Seewasser im Wesentlichen nicht zugänglich.

Es versteht sich, dass der Ponton 12 auch eine andere Querschnittsform haben kann. Beispielsweise kann der Ponton 12 auch dreieckförmig oder im Wesentlichen rund ausgebildet sein. Weiter versteht es sich, dass der Ponton 12 auch mehrere Zwischendecken oder gar keine Zwischendecke aufweisen kann, so dass also nur eine oder mehr als zwei Ebenen vorhanden sind.

Der Boden 14, die Zwischenwand 15 und die Plattform 16 sind etwa parallel zueinander angeordnet, während die Außenwände 17 hierzu etwa senkrecht ausgerichtet sind. Der Boden 14, die Zwischendecke 15 und die Plattform 16 sind mittels nicht dargestellter, etwa senkrecht ausgerichteter Stützen oder dergleichen zueinander befestigt, so dass insgesamt ein formstabiles Gebilde entsteht. Die Ausgestaltung und Dimensionierung des Bodens 14, der Zwischendecke 15, der Plattform 16, der Außenwände 17 und der sonstigen Stützen und dergleichen ist derart gewählt, dass auch schwere elektrische Komponenten des Umspannwerks 10 im Innenraum des Pontons 12 aufgenommen werden können.

Die Zwischendecke 15 unterteilt den Innenraum des Pontons in eine obere Ebene 18 und eine in etwa vertikaler Richtung darunter liegende untere Ebene 19. Jede der Ebenen weist eine Höhe von etwa 3 bis 4 Metern auf. Wie bereits erwähnt, ist die Zwischendecke 15 mit Hilfe von Stützen und dergleichen abgestützt und damit tragfähig. Wie ebenfalls bereits erwähnt, sind diese Stützen in den Figuren nicht dargestellt. Nur aufgrund dieser fehlenden Stützen scheint die Zwischendecke 15 in dem schematischen Querschnitt der Figur 2 zu schweben.

Die untere Ebene 19 baut auf dem Boden 14 auf und ist in der Draufsicht der Figur 1 sowie in dem Querschnitt der Figur 2 dargestellt. Auf dem Boden 14 sind beispielhaft zwei Transformatoren 21, insbesondere zwei Hermetik-Transformatoren, sowie zwei Drosseln 22, insbesondere zwei Kompensationsdrosseln, abgestellt. Weiterhin sind auf dem Boden 14 Leistungsschalter 23, insbesondere gasisolierte Leistungsschalter, aufgestellt. Die vorgenannten elektrischen Komponenten sind - wie in der Figur 1 gezeigt - am Außenrand des Bodens 14 im wesentlichen symmetrisch zueinander angeordnet.

Der Bereich 24 zwischen den Transformatoren 21 und den Drosseln 22 wird in der unteren Ebene 19 dazu verwendet, elektrische Kabel unterzubringen. Der übrige Bereich 25 in der unteren Ebene 19 ist nicht von elektrischen Komponenten des Umspannwerks 10 belegt und kann anderweitig verwendet werden.

Die Transformatoren 21, die Drosseln 22 und die Leistungsschalter 23 erstrecken sich hinsichtlich ihrer Höhe über beide Ebenen 18, 19. Die Transformatoren 21, die Drosseln 22 und die Leistungsschalter 23 sind deshalb auch in der oberen Ebene 18 des Pontons 12 vorhanden.

Im Betrieb des Umspannwerks wird von den Transformatoren 21, den Drosseln 22, den Leistungsschaltern 23 und gegebenenfalls von sonstigen Bauteilen Wärme erzeugt. Diese Wärme wird mit Hilfe eines Kühlsystems 30 an die den Ponton 12 umgebende Luft und/oder an das Seewasser abgegeben.

Das Kühlsystem 30 ist in der Figur 3 dargestellt. Die Figur 3 stellt dabei eine Draufsicht auf den Ponton 12 von unten dar (siehe die Richtung C der Figur 2), also auf die Unterseite des Bodens 14. Auf dieser Unterseite des Pontons 12 ist das Kühlsystem 30 angeordnet. Das Kühlsystem 30 befindet sich damit nicht im Innenraum des Pontons 12, sondern außerhalb des Pontons 12. Das Kühlsystem 30 ist damit von der den Ponton 12 umströmenden Luft umgeben.

Das Kühlsystem 30 weist eine Mehrzahl von Rohrleitungen 31 auf, die im vorliegenden Ausführungsbeispiel etwa parallel zueinander auf der Unterseite des Bodens 14 des Pontons 12 angeordnet sind. Es versteht sich, dass die Rohrleitungen 31 auch andersartig angeordnet sein können, beispielsweise mäanderförmig oder dergleichen. Ebenfalls ist es möglich, dass die Rohrleitungen 31 nicht nur - wie dargestellt - in etwa horizontaler Richtung nebeneinander angeordnet sind, sondern auch in etwa vertikaler Richtung übereinander. Insbesondere kann die gesamte, zur Verfügung stehende Fläche auf der Unterseite des Bodens 14 mit Rohrleitungen 31 belegt sein.

Zwischen den Rohrleitungen 31 ist immer ein Abstand vorhanden, und zwar in horizontaler Richtung, also entlang des Bodens 14, wie auch gegebenenfalls in vertikaler Richtung, so dass sämtliche Oberflächen der Rohrleitungen 31 für die den Ponton 12 umströmende Luft zugänglich sind.

Entsprechende Rohrleitungen können auch auf der Außenseite der Außenwände 17 vorhanden sein. Ebenfalls können entsprechende Rohrleitungen auf der Außen- und/oder der Innenseite der Säulen 13 vorhanden sein, und zwar dort oberhalb und insbesondere auch unterhalb der Oberfläche des Seewassers. Im letztgenannten Fall kann somit die von den elektrischen Komponenten des Umspannwerks 10 erzeugte Wärme auch an das Seewasser abgegeben werden.

In den Figuren 4a und 4b sind Querschnitte möglicher Rohrleitungen 31 dargestellt. Gemäß der Figur 4a ist es möglich, dass die Rohrleitung 31 im Querschnitt als Halbschale ausgebildet und auf der Unterseite des Bodens 14 bzw. an der Außenseite der Außenwand 17 bzw. an der Außen- und/oder Innenseite der Säule 13 befestigt, beispielsweise verschweißt ist. Ebenfalls ist es möglich, dass die Rohrleitung 31 einen etwa rechteckförmigen Querschnitt aufweist und auf der Unterseite des Bodens 14 bzw. an der Außenseite der Außenwand 17 bzw. an der Außen- und/oder Innenseite der Säule 13 befestigt ist. Es versteht sich, dass auch dreieckige oder mehreckige Querschnitte denkbar sind. Gemäß der Figur 4b ist es möglich, dass die Rohrleitung 31 einen runden Querschnitt besitzt und mit Hilfe eines Trägers 32 an der Unterseite des Bodens 14 bzw. an der Außenseite der Außenwand 17 bzw. an der Außen- und/oder Innenseite der Säule 13 befestigt, beispielsweise verschweißt ist. Der Träger 32 kann dabei eine fortlaufende Verbindung zwischen der Rohrleitung 31 und dem Boden 14 bzw. der Außenwand 17 bzw. der Säule 13 herstellen oder es kann sich auch um eine Vielzahl zueinander beabstandeter einzelner Träger 32 handeln.

Zur Vergrößerung der Oberfläche der Rohrleitungen 31 und damit zur Verbesserung der Abgabe von Wärme von den Rohrleitungen 31 kann vorgesehen sein, dass die Rohrleitungen 31 zumindest teilweise mit einer Finne 33 versehen sind, wie dies in der Figur 4a gestrichelt dargestellt ist. Es versteht sich, dass derartige Finnen 33 bei allen Rohrleitungen 31 der Figuren 4a und 4b zum Einsatz kommen können. Ebenfalls versteht es sich, dass die Finnen 33 nicht nur auf der Unterseite des Bodens 14 vorgesehen sein können, sondern ebenfalls an der Außenseite der Außenwände 17 und/oder an der Außenseite der Säulen 13.

Weiterhin kann vorgesehen sein, dass die Rohrleitungen 31 gegebenenfalls zusammen mit vorhandenen Finnen 33 etwa parallel zu der Hauptwindrichtung 35 ausgerichtet sind, die an dem Standort des Pontons 12 auf See üblicherweise vorherrscht. Dies ist schematisch in der Figur 3 gezeigt, und zwar für die Unterseite des Bodens 14 des Pontons 12. Es versteht sich, dass dies entsprechend auch für die Außenwände 17 und/oder die Säulen 13 des Pontons 12 anwendbar ist. Unter der Oberfläche des Seewassers können die Finnen 33 entsprechend einer Hauptströmungsrichtung des Seewassers ausgerichtet sein.

Gemäß der Figur 5 sind die Rohrleitungen 31 des Kühlsystems 30 zumindest teilweise zueinander parallel geschaltet. Zumindest in einzelnen Strängen der Parallelschaltung sind Drucksensoren 37 enthalten, mit denen ein Druckabfall in dem zugehörigen Strang erkannt werden kann. Weiterhin sind an den Enden der einzelnen Stränge zumindest teilweise Absperrventile 38 vorhanden, um den zugehörigen Strang abzusperren. Wird somit ein Druckabfall in einem bestimmten Strang des Kühlsystems 30 entdeckt, so kann dieser Strang abgesperrt und damit aus dem Kühlsystem 30 herausgenommen werden. Entsprechende Maßnahmen können auch für mehrere Stränge gemeinsam vorgenommen werden. Eine Leckage in einer der Rohrleitungen 31 führt damit nicht zu einem vollständigen, sondern nur zu einem teilweisen Ausfall des Kühlsystems 30.

Das Kühlsystem 30 ist mit einem üblichen Kühlmedium befüllt, beispielsweise mit normalem Wasser. Vorzugsweise ist das Kühlsystem 30 nicht mit See- oder Meerwasser befüllt, sondern ist hiervon vollständig abgetrennt.

Die Transformatoren 21 und sonstigen wärmeabgebenden Komponenten des Umspannwerks 10 sind mit Wärmetauschern oder dergleichen versehen, über die die erzeugte Wärme an das Kühlmedium und damit an das Kühlsystem 30 abgegeben wird. Die Wärme wird dann mit Hilfe der auf der Unterseite des Bodens 14 und/oder der an der Außenseite der Außenwand 17 und/oder der an der Außen- und/oder Innenseite der Säulen 13 vorgesehenen Rohrleitungen 31 des Kühlsystems 30 an die den Ponton 12 umströmende Luft und/oder an das Seewasser abgegeben. Auf diese Weise erfolgt eine Kühlung der Transformatoren 21 und sonstigen wärmeabgebenden Bauteile des Umspannwerks 10.

Aufgrund der im Wesentlichen wasserdichten Ausgestaltung des Pontons 12 sind die elektrischen Komponenten des Umspannwerks 10 weitestgehend gegen Salzwasser und dergleichen geschützt. In entsprechender Weise ist auch das Kühlsystem 30 gegen das Salzwasser geschützt.

Weiterhin kann der Innenraum des Pontons 12 klimatisiert werden. Auch die dabei abzuführende Wärme kann mit Hilfe eines Wärmetauschers oder dergleichen über die Rohrleitungen 31 des Kühlsystems 30 an die den Ponton 12 umströmende Luft und/oder das Seewasser abgegeben werden. Es versteht sich, dass die Dimensionierung des Pontons 12 derart vorgenommen werden muss, dass der Ponton 12 auch mit den in seinem Innenraum untergebrachten elektrischen Komponenten des Umspannwerks 10 sowie mit den auf der Unterseite des Bodens 14 angebrachten Rohrleitungen 31 noch schwimmfähig ist. Dies stellt jedoch bei den beispielhaft angegebenen Längen-, Breiten- und Höhenmaßen des Pontons 12 üblicherweise kein Problem dar.

Es versteht sich, dass das beschriebene Umspannwerk 10 auch dann einsetzbar ist, wenn die Windkraftanlage, also insbesondere das energieerzeugende Windrad, direkt auf der Plattform 16 des Pontons 12 aufgebaut ist. Ebenfalls versteht es sich, dass das Umspannwerk 10 auch bei anderen Energieerzeugungsanlagen eingesetzt werden kann, beispielsweise bei Wellenkraftwerken oder ähnlichen wassergebundenen Anlagen.

Weiterhin versteht es sich, dass das beschriebene Kühlsystem 30 auch dann eingesetzt werden kann, wenn die elektrischen Komponenten des Umspannwerks 10 nicht - wie erläutert - im Inneren des Pontons 12 untergebracht sind, sondern beispielsweise auf der Plattform 16 des Pontons 12 beispielsweise in Containern aufgestellt sind.

## Patentansprüche

1. Kühlsystem (30) für ein elektrisches Umspannwerk (10), **dadurch gekennzeichnet, dass** ein schwimmfähiger Ponton (12) vorhanden ist, der einen Boden (14) und Außenwände (17) aufweist, und der auf Säulen (13) aufgestellt ist, dass das Umspannwerk (10) elektrische Komponenten aufweist, die dem Ponton (12) zugeordnet sind, dass das Kühlsystem (30) Rohrleitungen (31) aufweist, die auf der Unterseite des Bodens (14) und/oder an den Außenseite der Außenwände (17) und/oder auf der Außenseite und/oder der Innenseite der Säulen (13) angeordnet sind, und dass die von den Komponenten des Umspannwerks (10) erzeugte Wärme mit Hilfe des Kühlsystems (30) an die den Ponton (12) umgebende Luft und/oder an das Seewasser abgebbar ist.

2. Schwimmfähiger Ponton (12), der einen Boden (14) und Außenwände (17) aufweist, und der auf Säulen (13) aufgestellt ist, **dadurch gekennzeichnet, dass** dem Ponton (12) elektrische Komponenten eines elektrischen Umspannwerks (10) zugeordnet sind, dass ein Kühlsystem (30) für die Komponenten des Umspannwerks (10) vorhanden ist, dass das Kühlsystem (30) Rohrleitungen (31) aufweist, die auf der Unterseite des Bodens (14) und/oder an den Außenseite der Außenwände (17) und/oder auf der Außenseite und/oder der Innenseite der Säulen (13) angeordnet sind, und dass die von den Komponenten des Umspannwerks (10) erzeugte Wärme mit Hilfe des Kühlsystems (30) an die den Ponton (12) umgebende Luft und/oder an das Seewasser abgebbar ist.

3. Kühlsystem (30) oder Ponton (12) nach einem der Ansprüche 1 oder 2, wobei die Rohrleitungen (31) im Querschnitt als Halbschale ausgebildet sind.

4. Kühlsystem (30) oder Ponton (12) nach einem der Ansprüche 1 oder 2, wobei die Rohrleitungen (31) mit Hilfe eines Trägers (32) befestigt sind.

5. Kühlsystem (30) oder Ponton (12) nach einem der Ansprüche 1 bis 4, wobei die Rohrleitungen (31) mit einer Finne (33) versehen sind.

6. Kühlsystem (30) oder Ponton (12) nach einem der Ansprüche 1 bis 5, wobei die Rohrleitungen (31) gegebenenfalls zusammen mit vorhandenen Finnen (33) etwa parallel zu einer Hauptwindrichtung (35) ausgerichtet sind, die an dem Standort des Pontons (12) auf See üblicherweise vorherrscht.

7. Kühlsystem (30) oder Ponton (12) nach einem der Ansprüche 1 bis 5, wobei die Rohrleitungen (31) mit einem üblichen Kühlmedium, insbesondere mit Wasser befüllt sind.
